# FASCICULE DE BREVET EUROPEEN

(11) **EP 0 583 843 B1**
(45) Date de publication et mention de la délivrance du brevet: **31.05.2000**
(21) Numéro de dépôt: 93202416.9
(22) Date de dépôt: 17.08.1993
(51) Int. Cl.: H04N 7/10, H04N 7/20

(54) **Système de distribution par câble de signaux de télévision et ensemble d'éléments pour constituer un tel système**
Kabelverteilungssystem für Fernsehsignale und Anordnung von Elementen um ein solches System zu bauen
Cable distribution system for television signals and set of elements for building such a system

(30) Priorité: 19.08.1992 FR 9210126
(43) Date de publication de la demande: 23.02.1994
(73) Titulaire: Koninklijke Philips Electronics N.V., 5621 BA Eindhoven (NL)
(72) Inventeur: Chanteau, Pierre, F-75008 Paris (FR)
(74) Mandataire: Charpail, François

(56) Documents cités:
- EP-A- 0 368 390
- EP-A- 0 371 401
- EP-A- 0 407 263
- WO-A-91/06159
- DE-A- 4 202 568
- DE-U- 9 108 899
- US-A- 4 542 300
- US-A- 5 073 930
- SECOND IEE NATIONAL CONFERENCE ON TELECOMMUNICATIONS 5 Avril 1989 pages 128 - 132 D MCGOVERN 'satellite television receivers for the domestic market'
- FUNKSCHAU vol. 63, no. 13 , Juin 1991 , MUNCHEN DE pages 56 - 61 EPHAN ET AL. 'ALLE VARIANTEN AUF EINEN STREICH'
- FUNKSCHAU vol. 25, no. 18 , Août 1989 , MUNCHEN DE pages 124 - 128 SCHAAS 'EIN GERÄT FÜR VIELE STANDARDS'
- ALTA FREQUENZA vol. 55, no. 2 , Avril 1986 , MILANO IT pages 105 - 111 MUSSINO 'reception and distribution techniques for DBS signals in community antenna installations'
- HANNOVER MESSE Avril 1991 , HANNOVER (DE) pages 1 - 12 SCHWAIGER 'ZUBEHÖR FÜR SATELLITEN-EMPFANGSANLAGEN'

## Description

La présente invention concerne un système de distribution de signaux de télévision, desservant une pluralité d'installations d'usager, et comportant
- un ensemble de plusieurs sources distinctes de signaux de télévision par satellite,
- une source de signaux de télévision terrestre,
- au moins un faisceau de câbles de descente desservant les usagers à partir de l'ensemble de sources de signaux,
- au moins un élément de branchement alloué à un groupe d'installations d'usagers, muni d'une pluralité de sorties raccordées chacune à une des installations du groupe, d'une pluralité d'entrées raccordées chacune à un des câbles du faisceau de descente, et de moyens de commutation en nombre égal à celui de ses sorties, chacun d'eux étant affecté à une des sorties pour sélectionner une des entrées de l'élément de branchement et la connecter à la sortie afférente, cette sélection se faisant pour chacun des dits moyens en fonction d'une variable électrique de commande reçue de l'installation d'usager correspondante.

Un tel système desservant un ensemble d'usagers, à partir d'antennes communautaires, trouve une application par exemple dans un immeuble d'habitation comportant une pluralité de logements. Un tel système est appelé par l'homme du métier "MATV".

Les systèmes classiques de MATV autorisent l'usager à choisir parmi plusieurs émissions en s'accordant sur une fréquence porteuse ou une autre. Sur la base d'une gamme de fréquences utiles allant de 950 à 1750 Mhz par exemple dans le cas de signaux provenant d'un satellite au moyen d'un convertisseur (en langue Anglaise : "Low Noise Converter" ou "Outdoor Unit") fournissant un signal porté par une fréquence située dans cette gamme de fréquences, avec des canaux d'environ 30 Mhz de largeur, il est possible de distinguer 24 canaux différents. Toutefois ce nombre est encore insuffisant si l'on considère par exemple qu'un ensemble de satellites comme celui connu sous le nom "Astra" comporte déjà plus de 24 canaux.

Le modèle d'utilité Allemand DE-U-9 108 899 (MIKROELECTRONIK NEUHAUS GMBH) décrit un système qui utilise deux sources de signaux H et V correspondant à deux polarisations en provenance d'un même satellite et, pour desservir une pluralité d'usagers il comporte, de proche en proche sur un faisceau de descente à deux câbles, des éléments de branchement à deux entrées (une pour chaque polarisation), chacun d'eux sélectionnant une des deux entrées en fonction de la valeur d'une tension de commande reçue du récepteur. Ce document ne traite que du cas de deux polarisations et ne suggère aucun moyen qui puisse être employé dans le cas où par exemple on désirerait recevoir plusieurs satellites.

L'invention se propose de fournir un système dont l'architecture soit telle qu'elle permette la desserte d'un grand nombre d'usagers, à partir d'un grand nombre de sources de signaux, avec un travail d'installation réduit et un matériel économique, tout en changeant le moins possible les habitudes des professionnels installateurs. On désire aussi que les capacités de l'installation puissent être augmentées sans trop de modifications en cas d'augmentation du nombre d'usagers ou du nombre de sources. En outre chaque usager doit pouvoir choisir une source indépendamment des autres usagers.

Dans un système selon l'invention, comprenant plus de deux sources distinctes de signaux de télévision par satellite, le faisceau de descente comporte un nombre de câbles de descente égal au nombre de sources distinctes de signaux de télévision par satellite et le système est muni d'un coupleur multiple pour répéter les signaux de télévision terrestre sur chacun des câbles en les ajoutant aux signaux de télévision par satellite, et l'élément de branchement est constitué d'un boîtier dérivateur et d'au moins un boitier commutateur distincts, le boîtier dérivateur étant muni de moyens de raccordement pour une pluralité de câbles de descente, possédant au moins un groupe d'une pluralité de sorties et contenant des moyens pour prélever de façon permanente une partie de la puissance du signal sur chaque câble et l'appliquer sur la sortie correspondante du groupe de sorties, un boîtier commutateur étant muni d'autant d'entrées que le boîtier dérivateur permet de raccorder de câbles, chacune de ces entrées étant connectée à une sortie du groupe de sorties du boîtier dérivateur, d'au moins une sortie raccordée par un câble une des dites installations d'usager, et contenant les susdits moyens de commutation de façon à sélectionner une de ses entrées et la connecter à sa sortie.

Dans un tel système c'est le type de boitier dérivateur qui varie (le nombre de sorties varie) avec le nombre d'installations d'usagers, et il y a par contre un seul modèle de boîtier commutateur (contenant de préférence plusieurs commutateurs élémentaires), seul le nombre de ces commutateurs variant selon les cas. Or le commutateur est l'élément le plus délicat à réaliser : le système selon l'invention est donc avantageux en ce qu'il permet de fabriquer le commutateur en plus grandes quantités, à un prix de masse économique.

Dans un mode de réalisation avantageux, un boîtier dérivateur comporte deux groupes de quatre sorties, et/ou les moyens de raccordement d'un boîtier dérivateur sont prévus pour raccorder quatre câbles.

Un boîtier commutateur comporte avantageusement quatre sorties (et par conséquent quatre commutateurs).

En outre avantageusement les boîtiers dérivateurs, de forme parallélipipédique, et prévus pour un nombre de câbles égal à N, comportent N prises de sortie sur chacune de deux faces opposées l'une à l'autre, et aucune prise sur deux faces opposées l'une à l'autre et situées entre les faces opposées comportant des prises de sortie.

Ainsi il est possible d'accoupler deux boîtiers dérivateurs côte à côte sans masquer une prise, et deux boîtiers dérivateurs accouplés peuvent présenter toutes leurs sorties d'un même côté.

Un ensemble d'éléments pour constituer un système selon l'invention comporte avantageusement deux types de boîtiers commutateurs, de forme parallélipipédique, un premier type comportant N prises d'entrée situées sur une même face en correspondance avec les prises de sortie d'un boitier dérivateur, et un deuxième type comportant 2 fois N prises d'entrée situées sur une même face, en correspondance avec les prises de sortie de deux boîtiers dérivateurs placés côte à côte.

Ainsi il est possible de connecter facilement un seul boîtier commutateur du second type à deux boîtiers dérivateurs ensemble.

Pour sélectionner une source parmi deux, il est évident d'utiliser deux tensions de commande. Un problème se pose néanmoins lorsqu'on désire sélectionner plus de deux sources, à partir de matériel existant ne fournissant que deux tensions de commande.

Pour résoudre ce problème, dans un système comportant au moins une installation d'usager possédant un décodeur satellite (en langue Anglaise : "Indoor Unit") muni d'une entrée de signaux de télévision pour des signaux provenant d'un satellite, décodeur capable d'appliquer sur cette entrée une tension continue de commande dans le but de commander la sélection, par un appareil externe, d'un signal parmi deux, et muni d'une sortie de courant de commande prévue pour la sélection d'une pluralité de signaux, un boîtier de raccordement et de commande est avantageusement inséré dans le câble entre la sortie du boîtier commutateur et l'entrée de signaux de télévision du décodeur satellite, et relié en outre à la dite sortie de courant de commande du décodeur satellite, ce boîtier de raccordement étant muni de moyens de liaison entre la partie de câble reliée à la sortie du boîtier commutateur et celle reliée à l'entrée de signaux de télévision du décodeur satellite, les faisant communiquer dans la bande des fréquences de télévision et les séparant du point de vue du courant continu et des fréquences basses, et d'un générateur réglable de signal de commande qui applique à la partie de câble reliée à la sortie du boîtier commutateur un signal de commande ad hoc, déterminé en fonction d'une part de la valeur de la dite tension continue appliquée par le décodeur satellite sur son entrée de signaux de télévision et d'autre part de la valeur du dit courant de commande du décodeur satellite.

Ces aspects de l'invention ainsi que d'autres aspects plus détaillés apparaîtront plus clairement grâce à la description suivante d'un mode de réalisation non limitatif.
La figure 1 est un schéma d'ensemble d'un petit système selon l'invention desservant 8 usagers, les installations d'usagers proprement dites n'étant pas représentées.
La figure 2 est un schéma d'ensemble d'un système moyen desservant 52 usagers, les installations d'usagers proprement dites n'étant pas représentées.
La figure 3 représente schématiquement une installation d'usager.
La figure 4 représente en perspective un ensemble fait d'un boîtier dérivateur et de deux boîtiers commutateurs.

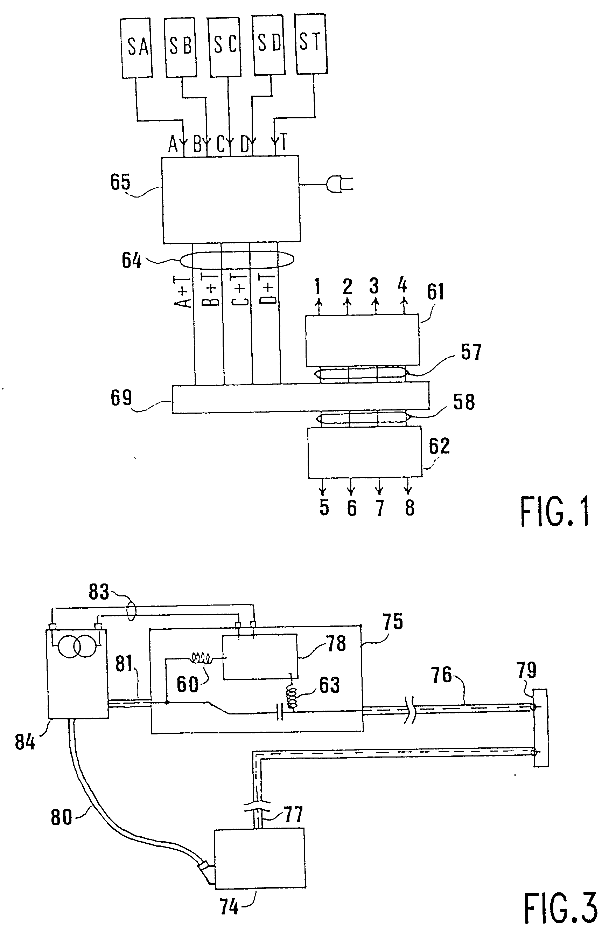

Le système de distribution par câble de signaux de télévision dont le schéma est représenté sur la figure 1 dessert huit installations d'usager. Il comporte plusieurs sources de signaux de télévision SA, SB, SC, SD, ST. La source ST est par exemple une antenne ou un ensemble d'antennes pour la réception d'émissions par voie terrestre, associées à un ou plusieurs amplificateurs situés à proximité pour améliorer le rapport signal/bruit. Les sources SA, SB, SC, SD, utilisent des paraboles de réception d'émissions par satellite, associées aux têtes de réception et aux convertisseurs correspondants ("LNC") qui ont, entre autres, pour fonction d'abaisser la fréquence du signal pour l'amener dans la bande de 950 à 1750 Mhz déjà mentionnée. Dans le présent exemple il y a donc une source ST pour la réception d'émissions par voie terrestre, délivrant ses signaux dans une gamme de fréquences de 40 à 860 MHz sur un câble référencé T, et il y a quatre sources basées sur des émissions par satellite, délivrant des signaux dans une gamme de fréquences de 950 à 1750 Mhz sur des câbles référencés A, B, C, D. Toutes ces sources sont localisées à proximité l'une de l'autre, par exemple sur le toit d'un immeuble.

Le système est muni en outre d'un coupleur multiple 65 auquel sont amenées les signaux des sources connectées en A, B, C, D, T. Ce coupleur fournit sur chacune de ses quatre connexions de sortie 64 respectivement les signaux provenant du couplage des connexions A et T, les signaux provenant du couplage des connexions B et T, les signaux provenant du couplage des connexions C et T, les signaux provenant du couplage des connexions D et T, ces signaux pouvant en outre être amplifiés.

L'ensemble des sources de signaux possède donc en fin de compte quatre sorties 64. Il est suivi d'un faisceau de descente comportant quatre câbles, c'est-à-dire autant qu'il y a de sources de signaux par satellite.

A proximité des usagers, les câbles du faisceau sont raccordés à un boitier dérivateur 69. Un dérivateur est un organe bien connu de l'homme du métier, qui contient des moyens pour prélever de façon permanente une partie de la puissance d'un signal sur une ligne accordée et l'appliquer sur une sortie d'impédance ad hoc. Le dérivateur 69 est multiple : il comporte quatre dérivateurs élémentaires, dont les sorties sont reliées par des liaisons 57, 58, faites chacune au moyen de quatre connecteurs coaxiaux, aux entrées de deux boîtiers commutateurs 61, 62, munis chacun de quatre prises d'entrée. Chaque prise de sortie d'un de ces boîtiers commutateurs est à son tour raccordée à une des dites installations d'usager par un câble 1 (ou 2, 3,...8) qui sera appelé ci-après "câble d'usager". Les installations d'usagers forment ici un groupe de huit installations, divisé lui même en deux sous-groupes de quatre, chacun des deux sous-groupes étant desservi par un boîtier commutateur, respectivement 61, 62.

Chaque boîtier commutateur est muni de moyens non représentés, que l'homme du métier sait facilement fabriquer à partir d'interrupteurs (électroniques ou mécaniques) programmables, pour sélectionner une entrée parmi ses quatre entrées et la connecter à l'une de ses quatre sorties (1-4 ou 5-8) en fonction de la valeur d'une variable électrique de commande, et ceci pour chacune des quatre sorties. Cette variable électrique de commande est appliquée à chacun des câbles d'usager 1 à 8 et peut facilement être séparée des signaux de télévision proprement dits du fait de leurs fréquences très différentes. La variable de commande est par exemple une tension continue, avec éventuellement une tension à basse fréquence superposée.

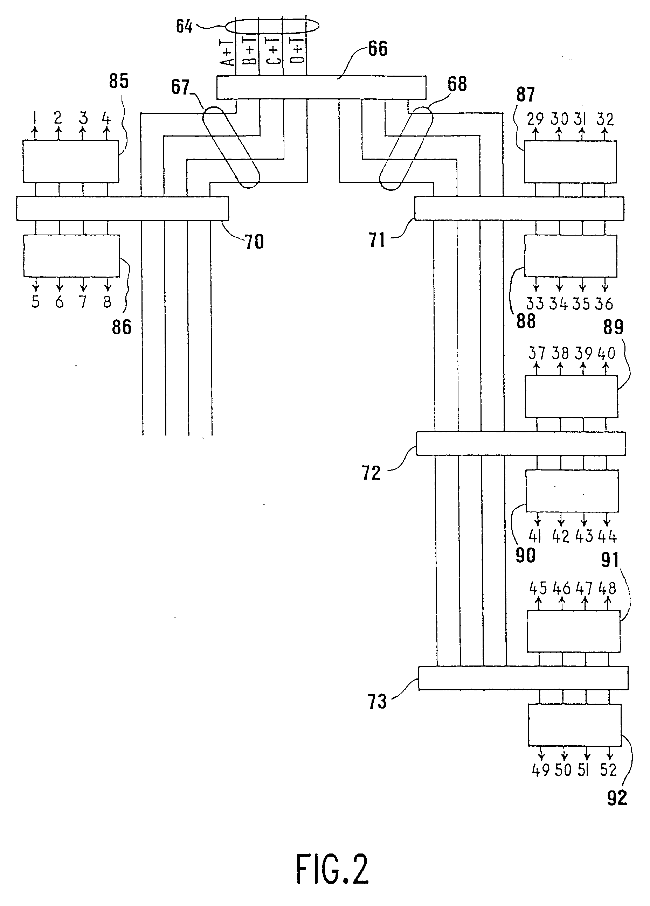

Le système de distribution par câble de signaux de télévision dont le schéma est représenté sur la figure 2 dessert 52 installations d'usager.

Il comporte plusieurs sources de signaux de télévision et un coupleur multiple comme dans le système de la figure 1, et ces éléments ne sont donc pas représentés à nouveau.

Les quatre entrées A+T, B+T, C+T, D+T provenant du coupleur multiple sont reliées à quatre entrées d'un répartiteur à deux directions 66, situé à proximité de l'ensemble de sources de signaux. Ce répartiteur est un organe répartissant sur deux câbles les signaux provenant d'un câble. Les quatre câbles 64 de la figure 1 sont donc remplacés par deux fois quatre câbles : il y a deux faisceaux de descente 67, 68.

Sur chacun de ces faisceaux de descente sont insérés une pluralité de boîtiers dérivateurs 70, 71 à 73 dont chacun est alloué à un groupe d'installations d'usagers. Chaque boîtier dérivateur 70 à 73 dessert un groupe de huit installations en association avec à chaque fois deux boîtiers commutateurs à quatre sorties, les boîtiers commutateurs 85 et 86 desservant par exemple les installations 1 à 8 d'une part et les boîtiers commutateurs 87 à 92 desservant les installations 29 à 52 d'autre part. Il existe des installations disposées symétriquement par rapport aux installations 37 à 52 mais elles ne sont pas représenté, pour simplifier la figure.

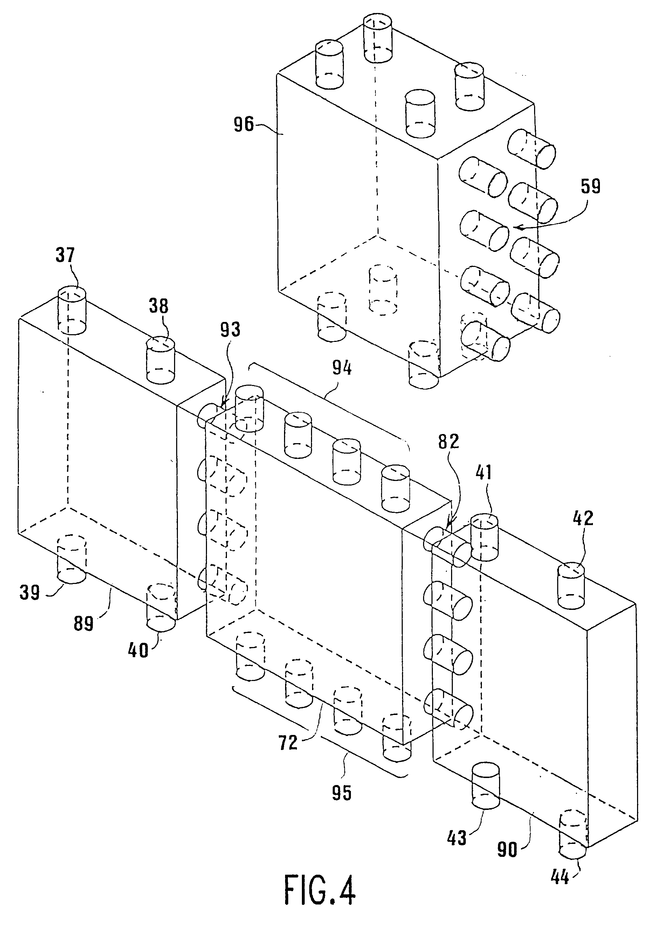

L'installation d'usager représentée sur la figure 3 comprend :
- un téléviseur 74,
- un décodeur 84 d'émission par satellite muni d'une entrée pour des signaux de télévision provenant d'un satellite,
- un boîtier 75 de raccordement et de commande,
- et un répartiteur 79 relié par un câble d'usager non représenté à une sortie d'un des boîtiers commutateurs qui sera décrit plus loin en regard de la figure 2 (références 61 ou 62). Ce répartiteur comporte un filtre séparateur connu pour séparer selon la fréquence ce qui doit être fourni respectivement au téléviseur 74 et au décodeur 84 (c'est-à-dire respectivement les bandes 40-820 MHz et 950-1750 MHz). Il transmet aussi les courants continu et basse-fréquence, au moins vers le décodeur 84.

Le signal décodé par le décodeur 84 est amené au téléviseur 74 en bande de base par une liaison dite de péritélévision 80.

L'entrée du décodeur pour des signaux de télévision provenant d'un satellite est reliée au boîtier 75 par un câble de liaison 81. Cette liaison peut être faite par un câble très court, le boîtier 75 étant par exemple monté derrière le décodeur 84 ou au moins à proximité immédiate.

Il peut même s'agir d'une prise portée par le boîtier 75 et directement enfichée dans la prise ad hoc du décodeur 84 (le boîtier 75 est petit et léger). Le boîtier 75 est lui même relié par un câble 76 au répartiteur 79. En pratique donc, le boîtier de raccordement et de commande est inséré dans le câble entre la sortie du boîtier commutateur (61, 62, figure 1) et l'entrée de signaux de télévision du décodeur satellite.

Le téléviseur est relié par un câble 77 au répartiteur 79.

Les câbles sont raccordés par des fiches, non représentées pour alléger la figure.

Le boîtier 75 comporte des moyens de raccordement faisant communiquer en courant alternatif (au moins dans la bande 950-1750 MHz), via une capacité en série, la partie de câble 76 avec la prise ou la partie de câble 81 raccordée au décodeur. En fonction du choix réalisé par l'usager, la plupart des décodeurs du commerce peuvent engendrer une tension continue de 14 ou de 18 volts sur leur prise d'entrée (ici 81) pour sélectionner une polarisation parmi deux. Certains décodeurs du commerce (mais pas tous) peuvent aussi engendrer un courant continu, dont les valeurs sont habituellement comprises dans une gamme allant de 0 à 42 milliampères, dans une liaison bifilaire (ici 83), pour sélectionner une source ou une autre, grâce à un commutateur spécifique, étudié pour fonctionner avec ce décodeur. Au lieu d'utiliser un commutateur spécifique du décodeur, le boîtier de raccordement et de commande 75 contient un générateur 78 de variable électrique de commande qui applique au câble 76 un signal de commande de sélection de source, différent de celui fourni par le décodeur, via une inductance d'arrêt 63. Ce générateur de variable électrique de commande est connecté à la fois à l'entrée 81 du décodeur satellite via une inductance d'arrêt 60, et également à la dite liaison bifilaire 83 de courant de commande, et il détermine lui même la valeur de la variable électrique de commande à appliquer, en fonction d'une part de la valeur de la dite tension appliquée par le décodeur satellite sur son entrée 81 et d'autre part de la valeur du dit courant engendré sur la liaison 83. Comme la correspondance entre la valeur du courant et les indications d'un usager peut être programmée dans le décodeur, le générateur 78 n'a pas besoin d'être programmable : c'est le décodeur qui est programmé pour fournir le courant voulu pour chaque choix de l'usager.

Selon un premier exemple de réalisation, les tensions de commande engendrées par le générateur 78 prennent des valeurs discrètes, par exemple 0 volt, 3 volts, 6 volts, 9 volts, etc, dont chacune correspond à une sélection différente à réaliser par le boîtier commutateur. Il est préférable que la valeur 0 volt corresponde à une sélection de la part du commutateur, afin que ce dernier fournisse néanmoins un signal utilisable lorsqu'il est associé à une installation qui ne lui fournit aucune tension de commande (installation ne comportant pas de boîtier de raccordement selon l'invention).

Selon un autre exemple de réalisation, les tensions de commande engendrées par le générateur 78 prennent deux valeurs de tension continue discrètes, par exemple 14 volt et 18 volts, et une tension alternative ayant par exemple une valeur efficace de 1 volt et une fréquence de 22 Khz lui est superposée ou non. On dispose donc soit de simplement 14 volts continus, soit de 14 volts continus plus 1 volt alternatif à 22 kHz, soit de simplement 18 volts continus, soit de 18 volts continus plus 1 volt alternatif à 22 kHz, ce qui procure donc quatre possibilités, dont chacune correspond à une sélection différente à réaliser par le boîtier commutateur. Ce second mode de réalisation est plus facile à réaliser, puisque dans les cas où le signal fourni correspond à simplement 14 volts ou 18 volts continus, il suffit de transmettre sans modification la tension sur la sortie du décodeur 84.

Bien entendu chaque logement peut être raccordé à plusieurs sorties de boîtier commutateur, par exemple à deux sorties, afin de pouvoir recevoir simultanément un signal en provenance de deux satellites différents, par exemple pour en enregistrer un sur magnétoscope pendant que l'autre est visionné en temps réel.

Dans l'ensemble d'un boîtier dérivateur et de deux boîtiers commutateurs représenté par la figure 4, le boîtier dérivateur 72, de forme parallélipipédique, est prévu pour un nombre de câbles égal à quatre.

Pour la connexion aux câbles, ces derniers sont coupés et chacune des parties est raccordée au dérivateur. Ce dernier comporte à cet effet quatre prises 94 d'entrée de câbles et quatre prises 95 de sortie de câbles (toutefois un boitier terminal comme le boitier 73 de la figure 2 ne possède pas de prises 95). Tous les boîtiers dérivateurs comportent aussi quatre prises de sortie 82 et quatre prises de sortie 93 situées respectivement sur deux faces allongées opposées l'une à l'autre. Il n'y a par contre aucune prise sur les deux faces opposées, à peu près carrées, voisines de la face comportant les prises de sortie 82, ou de la face comportant les prises de sortie 93.

Les boîtiers commutateurs 89 et 90, de forme parallélipipédique, comportent chacun quatre prises d'entrée respectivement 93 ou 82, situées sur une face en correspondance avec les prises de sortie du boîtier dérivateur 72. Les prises 37 à 44 sont raccordées par les câbles d'usager aux installations d'usager.

Un deuxième type de boîtier commutateur représenté avec la référence 96 comporte deux fois quatre prises d'entrée situées sur une même face 59.

Elles ont ainsi une disposition qui les place en correspondance avec les prises de sortie de deux boîtiers dérivateurs placés côte à côte, accolés par une face sans prises. Si par exemple on dispose de huit sources de signaux satellite distinctes, on place près de chaque groupe d'installations d'usagers deux boîtiers comme le boîtier 72, accolés par une des faces carrées sans prises, on y connecte les huit câbles au moyens de deux fois quatre prises 94 (et deux fois quatre prises 95, sauf dans le cas d'un boîtier terminal) et on enfiche un boîtier commutateur du type du boitier 96 sur les huit prises 82 (ou 93) présentées par les deux boîtiers 72 côte à côte.

L'avantage principal de la conception selon l'invention est donc qu'avec une panoplie de boîtiers commutateurs et de boîtiers dérivateurs limitée, il est possible de couvrir une gamme d'installation très diverses. La panoplie peut par exemple comprendre :
- en ce qui concerne les boîtiers commutateurs : des modèles à quatre entrées / quatre sorties (référence 89 ou 90, figure 4) pour desservir quatre usagers lorsqu'il y a quatre sources par satellite disponibles, des modèles à quatre entrées / huit sorties (non représentés) pour desservir huit usagers lorsqu'il y a quatre sources par satellite disponibles, des modèles à huit entrées / quatre sorties (non représentés) pour desservir quatre usagers lorsqu'il y a huit sources par satellite disponibles, et des modèles à huit entrées / huit sorties pour desservir (référence 96, figure 4) huit usagers lorsqu'il y a huit sources par satellite disponibles.
   Si par exemple le nombre d'usagers d'un groupe augmente, l'installation peut être améliorée facilement en remplaçant un boîtier à quatre sorties par un modèle à huit sorties, et lorsque par exemple le nombre de sources augmente au cours du temps, l'installation peut être améliorée en remplaçant des boîtiers à quatre entrées par des modèles à huit entrées.
- en ce qui concerne les boîtiers dérivateurs : des modèles de tête dits "20 Db" (boîtiers dérivateurs 70 et 71, figure 2), des modèles intermédiaires dits "15 dB" (boîtier dérivateur 72, figure 2), et des modèles terminaux dits "11 dB" (boîtier dérivateur 73, figure 2), le choix du modèle à utiliser dépendant de sa distance par rapport aux sources sur le faisceau de descente.

La même panoplie limitée peut aussi servir dans le cas d'une maison individuelle. Dans ce cas il y a encore un ensemble de sources comme les sources SA, SB, ST de la figure 1, avec un coupleur multiple analogue à celui (65) de la figure 1, éventuellement sans amplification, pas de dérivateur mais un boîtier commutateur à quatre entrées / quatre sorties, de façon à pouvoir fournir à l'usager individuel jusqu'à quatre prises pour quatre installations de télévision distinctes.

## Revendications

1. Système de distribution de signaux de télévision, desservant une pluralité d'installations d'usager, et comportant
- un ensemble de plusieurs sources distinctes de signaux de télévision par satellite (SA,SB,SC,SD),
- une source de signaux de télévision terrestre (ST),
- au moins un faisceau de câbles de descente (67,68) desservant les usagers à partir de l'ensemble de sources de signaux,
- au moins un élément de branchement (69-73;61,62,85-92) alloué à un groupe d'installations d'usagers, muni d'une pluralité de sorties raccordées chacune à une des installations du groupe, d'une pluralité d'entrées raccordées chacune à un des câbles du faisceau de descente, et de moyens de commutation en nombre égal à celui de ses sorties, chacun d'eux étant affecté à une des sorties pour sélectionner une des entrées de l'élément de branchement et la connecter à la sortie afférente, cette sélection se faisant pour chacun des dits moyens en fonction d'une variable électrique de commande reçue de l'installation d'usager correspondante,
caractérisé en ce que, le système comprenant plus de deux sources distinctes de signaux de télévision par satellite (A-D), le faisceau de descente comporte un nombre de câbles de descente égal au nombre de sources distinctes de signaux de télévision par satellite et il est muni d'un coupleur multiple pour répéter les signaux de télévision terrestre (T) sur chacun des câbles en les ajoutant aux signaux de télévision par satellite (A+T,B+T,C+T,D+T), et l'élément de branchement est constitué d'un boîtier dérivateur (69-73) et d'au moins un boîtier commutateur (61,62;85-92;96) distincts,
le boîtier dérivateur (69-73) étant muni de moyens de raccordement pour une pluralité de câbles de descente, possédant au moins un groupe d'une pluralité de sorties et contenant des moyens pour prélever de façon permanente une partie de la puissance du signal sur chaque câble et l'appliquer sur une sortie correspondante du groupe de sorties,
un boîtier commutateur (61,62;85-92) étant muni d'autant d'entrées que le boîtier dérivateur permet de raccorder de câbles, chacune de ces entrées étant connectée à une sortie du groupe de sorties du boîtier dérivateur, d'au moins une sortie raccordée par un câble (1-8;29-52) une des dites installations d'usager, et contenant les susdits moyens de commutation de façon à sélectionner une de ses entrées et la connecter à sa sortie.

2. Système selon la revendication 1, caractérisé en ce qu'un boîtier dérivateur (69-73) comporte deux groupes de quatre sorties.

3. Système selon la revendication 1, caractérisé en ce que les moyens de raccordement d'un boîtier dérivateur (69-73) sont prévus pour raccorder quatre câbles.

4. Système selon la revendication 1, caractérisé en ce qu'un boîtier commutateur (61,62;85-92) comporte quatre sorties.

5. Système selon la revendication 1, caractérisé en ce qu'un boîtier commutateur (96) comporte huit sorties.

6. Système selon l'une quelconque des revendications 1 à 5, caractérisé en ce que les boîtiers dérivateurs (72), de forme parallélipipédique, et prévus pour un nombre de câbles égal à N, comportent N prises de sortie sur au moins une face, et aucune prise sur deux faces voisines de la face comportant des prises de sortie.

7. Système selon la revendication 6, caractérisé en ce qu'un boîtier commutateur (89,90;96) a une forme parallélipipédique et comporte, soit N prises d'entrée situées sur une même face en correspondance avec les prises de sortie d'un boîtier dérivateur (72), soit 2 fois N prises d'entrée (59) situées sur une même face, en correspondance avec les prises de sortie de deux boîtiers dérivateurs (72) placés côte à côte.

8. Système selon l'une quelconque des revendications 1 à 7, caractérisé en ce qu'il comporte plusieurs faisceaux de descente (67,68) et un répartiteur (66) qui distribue les signaux des sources sur chacun des faisceaux de descente.

9. Système selon l'une quelconque des revendications 1 à 8, dans lequel au moins une installation d'usager possède un décodeur satellite (84) muni d'une entrée de signaux de télévision (81) pour des signaux provenant d'un satellite, décodeur capable d'appliquer sur cette entrée (81) une tension continue de commande dans le but de commander la sélection, par un appareil externe, d'un signal parmi deux, et muni d'une sortie de courant de commande prévue pour la sélection d'une pluralité de signaux, caractérisé en ce qu'un boîtier de raccordement et de commande (75) est inséré dans le câble (76) entre la sortie du boîtier commutateur et l'entrée (81) de signaux de télévision du décodeur satellite, et relié en outre à la dite sortie de courant de commande du décodeur satellite, ce boîtier de raccordement étant muni de moyens de liaison entre la partie de câble (76) reliée à la sortie du boîtier commutateur et celle (81) reliée à l'entrée de signaux de télévision du décodeur satellite (84), les faisant communiquer dans la bande des fréquences de télévision et les séparant du point de vue du courant continu et des fréquences basses, et d'un générateur réglable (78) de signal de commande qui applique à la partie de câble (76) reliée à la sortie du boîtier commutateur un signal de commande ad hoc, déterminé en fonction d'une part de la valeur de la dite tension continue appliquée par le décodeur satellite (84) sur son entrée de signaux de télévision (81) et d'autre part de la valeur du dit courant de commande du décodeur satellite (84).

## Claims

1. A system for distributing television signals to a plurality of user installations, which system comprises
- an assembly of several separate satellite television signal sources (SA, SB, SC, SD),
- a terrestrial television signal source (ST),
- at least a cable distribution network (67,68) serving the users on the basis of the assembly of signal sources,
- at least a branching element (69-73; 61,62, 85-92) allocated to a group of user installations and having a plurality of outputs each coupled to one of the installations of the group, a plurality of inputs each coupled to one of the cables of the distribution network, and switching means whose number is equal to the number of its outputs, each switching means being assigned to one of the outputs for selecting one of the inputs of the branching element and connecting it to the relevant output, this selection being made for each of said means as a function of an electric control variable received by the corresponding user installation,
characterized in that, with the system comprising more than two separate satellite television signal sources (A-D), the distribution network comprises a number of distribution cables which is equal to the number of separate satellite television signal sources and is provided with a multiple coupler for repeating the terrestrial television signals (T) on each cable by adding them to the satellite television signals (A+T, B+T, C+T, D+T), and the branching element is constituted by a shunting unit (69-73) and at least one switching unit (61,62; 85-92; 96), the shunting unit (69-73) being provided with means for connecting a plurality of cables of the distribution network and having at least a group of a plurality of outputs and means for permanently taking off a part of the power of the signal on each cable and for applying it to a corresponding output of the group of outputs, a switching unit (61,62; 85-92) having as many inputs as the shunting unit allows connection of cables, each of these inputs being connected to an output of the group of outputs of the shunting unit, at least one output connected by means of a cable (1-8; 29-52) to one of said user installations and comprising said switching means for selecting one of its inputs and connecting it to its output.

2. A system as claimed in claim 1, characterized in that a shunting unit (69-73) has two groups of four outputs.

3. A system as claimed in claim 1, characterized in that the connection means of a shunting unit (69-73) are provided for connecting four cables.

4. A system as claimed in claim 1, characterized in that a switching unit (61,62; 85-92) has four outputs.

5. A system as claimed in claim 1, characterized in that a switching unit (96) has eight outputs.

6. A system as claimed in any one of claims 1 to 5, characterized in that the shunting units (72), which have a parallelepiped shape and are provided for a number of cables which is equal to N, comprise N output connectors on at least one side and no connector on two sides adjacent to the side comprising the output connectors.

7. A system as claimed in claim 6, characterized in that a switching unit (89,90; 96) has a parallelepiped shape and comprises either N input connectors situated on the same side and corresponding to the output connectors of a shunting unit (72), or twice N input connectors (59) situated on the same side and corresponding to the output connectors of the two shunting units (72) arranged side by side.

8. A system as claimed in any one of claims 1 to 7, characterized in that it comprises several distribution networks (67,68) and a distributor (66) which distributes the source signals to each distribution network.

9. A system as claimed in any one of claims 1 to 8, in which at least one user installation comprises a satellite decoder (84) having a satellite television signal input (81) and being capable of applying a DC control voltage to said input (81) for the purpose of controlling the selection, by means of an external apparatus, of one of two signals, and having a control current output for selecting a plurality of signals, characterized in that a connection and control unit (75) is inserted in the cable (76) between the output of the switching unit and the television signal input (81) of the satellite decoder, and is also connected to said control current output of the satellite decoder, this connection unit comprising connection means between the part of the cable (76) coupled to the output of the switching unit and the part (81) coupled to the television signal input of the satellite decoder (84), causing them to communicate in the television frequency band and to DC-separate them as well as for low frequencies, and an adjustable control signal generator (78) which applies an ad hoc control signal to the part of the cable (76) coupled to the output of the switching unit, which control signal is determined as a function of the value of said direct voltage applied by the satellite decoder (84) to its television signal input (81) and of the value of said control current of the satellite decoder (84).

## Patentansprüche

1. Kabelverteilungssystem für Fernsehsignale zur Übertragung an eine Vielzahl von Anwenderanlagen, die enthält:
- eine Struktur mit mehreren unterschiedlichen Fernsehsignalquellen über Satellit (SA, SB, SC SD),
- eine terrestrische Fernsehsignalquelle (ST),
- mindestens einen zuführenden Kabelstrang zur Übertragung an die Anwender, ausgehend von der Struktur an Signalquellen,
- Mindestens ein Anschlußelement (69-73; 61, 62, 85-92) für eine Gruppe Anwenderanlagen, versehen mit einer Vielzahl von Ausgängen, jeweils an eines der Anlagen der Gruppe angeschlossen, einer Vielzahl von Eingängen, jeweils an eines der Kabel der zuführenden Stränge angeschlossen, und Umschaltmittel in gleicher Anzahl zu der der Ausgänge, von denen jedes einem der Ausgänge zugeteilt ist, um einen der Eingänge des Anschlußelements zu wählen und es an den betreffenden Ausgang anzuschließen, wobei diese Auswahl für jedes der besagten Mittel unter Berücksichtigung einer variablen elektrischen Steuerung vorgenommen wird, die von der entsprechenden Anwenderanlage erhalten wird, dadurch gekennzeichnet, daß das System mehr als zwei unterschiedliche Fernsehsignalquellen über Satellit (A-D) enthält, der zuführende Kabelstrang eine Anzahl zuführender Kabeladern gleich der Anzahl unterschiedlicher Fernsehsignalquellen über Satellit enthält, und es mit einem Mehrfachkoppler versehen ist, um jedes der terrestrischen Fernsehsignale an jedes der Kabel zu übertragen, indem sie zu den Fernsehsignalen über Satellit (A+T, B+T, C+T, D+T) hinzugefügt werden, und das Anschlußelement aus einem Abzweigkasten (69-73) und mindestens einem gesonderten Schaltkasten (61, 62; 85-92; 96) gebildet wird, wobei der Abzweigkasten (69-73) mit Mitteln versehen ist für den Anschluß einer Vielzahl zuführender Kabel, mindestens eine Gruppe einer Vielzahl an Ausgängen aufweist und Mittel enthält, um auf permanente Art einen Teil der Signalleistung an jedem Kabel zu entnehmen und sie dem entsprechenden Ausgang der Gruppe Ausgänge zuzuführen, wobei ein Schaltkasten (61, 62; 85-92) mit ebenso vielen Eingängen versehen ist wie die möglichen Kabelanschlüsse des Abzweigkastens, jeder dieser Eingänge an einen Ausgang der Gruppe Ausgänge des Abzweigkastens angeschlossen ist, mindestens ein Ausgang über ein Kabel (1-8; 29-52) an eine der besagten Anwenderanlagen angeschlossen ist und die obengenannten Schaltmittel enthält, um einen seiner Eingänge zu wählen und ihn an seinen Ausgang anzuschließen.

2. System nach Anspruch 1, dadurch gekennzeichnet, daß ein Abzweigkasten (69-73) zwei Gruppen zu vier Ausgängen enthält.

3. System nach Anspruch 1, dadurch gekennzeichnet, daß die Anschlußmittel eines Abzweigkastens (69-73) vorgesehen sind, um vier Kabel anzuschließen.

4. System nach Anspruch 1, dadurch gekennzeichnet, daß ein Schaltkasten (61, 62; 85-92) vier Ausgänge aufweist.

5. System nach Anspruch 1, dadurch gekennzeichnet, daß ein Schaltkasten (96) acht Ausgänge aufweist.

6. System nach einem beliebigen Anspruch 1 bis 5, dadurch gekennzeichnet, daß die quaderförmigen und für eine Anzahl Kabel gleich N vorgesehenen Abzweigkästen (72) N Ausgangsanschlüsse auf mindestens einer Seite enthalten, und keinerlei Anschluß an auf den beiden Seiten, die neben der Seiten mit den Ausgangsanschlüssen liegen.

7. System nach Anspruch 6, dadurch gekennzeichnet, daß ein quaderförmiger Schaltkasten (89, 90; 96) entweder N Eingangsanschlüsse auf derselben Seite enthält, in Übereinstimmung mit den Ausgangsanschlüssen eines Abzweigkastens (72), oder 2 mal N Eingangsanschlüsse (59) auf derselben Seite, in Übereinstimmung mit den Ausgangsanschlüssen von zwei nebeneinander angeordneten Abzweigkästen (72).

8. System nach einem beliebigen Anspruch 1 bis 7, dadurch gekennzeichnet, daß es mehrere zuführende Stränge (67, 68) und einen Verteiler (66) enthält, der die Signale der Quellen an jeden der zuführenden Stränge verteilt.

9. System nach einem beliebigen Anspruch 1 bis 8, in dem mindestens eine Anwenderanlage einen Satellitendecoder (84) enthält, mit einem Fernsehsignaleingang (81) für über Satelliten übertragene Signale versehen, dazu fähigem Decoder, diesem Eingang (81) eine Gleichstromsteuerspannung zuzuführen, mit dem Ziel, die Auswahl über ein externes Gerät eines von zwei Signalen zu steuern, und mit einem Ausgang des Steuerstroms versehen, zur Auswahl einer Vielzahl an Signalen vorgesehen, dadurch gekennzeichnet, daß ein Anschluß- und Steuerkasten (75) in das Kabel (76) zwischen dem Ausgang des Schaltkastens und dem Eingang (81) der Fernsehsignale des Satellitendecoders eingefügt und zudem mit dem besagten Ausgang des Steuerstroms des Satellitendecoders verbunden ist, wobei dieser Anschlußkasten versehen ist mit Verbindungsmitteln zwischen dem Teil des Kabels (76), das mit dem Ausgang des Schaltkastens verbunden ist sowie dem (81) mit dem Eingang der Fernsehsignale des Satellitendecoders (84) verbundenen, diese im Frequenzbereich des Fernsehens verbindet und sie hinsichtlich des Gleichstroms und der niederen Frequenzen trennt, und einem regelbarer Steuersignalgenerator (78), der an den Teil des Kabels (76), mit dem Ausgang des Schaltkastens verbunden, ein Steuersignal ad hoc leitet, bestimmt unter Berücksichtigung einerseits des Wertes der besagten Gleichstromsteuerspannung, zugeführt vom Satellitendecoder (84) an seinen Eingang der Fernsehsignale (81), und andererseits des Wertes des besagten Steuerstroms des Satellitendecoders (84).
